# EUROPEAN PATENT APPLICATION

(11) **EP 4 400 015 A1**
(43) Date of publication of application: **17.07.2024**
(21) Application number: 23162929.6
(22) Date of filing: 20.03.2023
(51) Int. Cl.: A47L 7/00, A47L 11/10, A47L 11/24, A47L 11/40, A47L 13/26

(54) **CARTRIDGE AND WET CLEANING ASSEMBLY**

(30) Priority: 10.01.2023 WO PCT/CN2023/071638
(71) Applicant: Versuni Holding B.V., 5656 AE Eindhoven (NL)
(72) Inventor: LUBBERS, Matthijs Hendrikus, 5656 AE Eindhoven (NL); TEN DONKELAAR, Henk Jan, 5656 AE Eindhoven (NL); POGODINA, Olga, 5656 AE Eindhoven (NL); BEUGELS, Johannes, 5656 AE Eindhoven (NL); VEENING, Christiaan Caspar Eduard, 5656 AE Eindhoven (NL); WIERSEMA, Willem, 5656 AE Eindhoven (NL); LIU, Qing, 5656 AE Eindhoven (NL)
(74) Representative: Vollering, Stefanus Franciscus Maria

(57) **Abstract**

Provided is a cartridge (100) attachable to a wet cleaning apparatus, in particular a wet floor cleaning apparatus. The wet cleaning apparatus has a volume displacement device (102) for dosing surface treating agent from the cartridge when the cartridge is attached to the wet cleaning apparatus. The cartridge comprises a chamber (106) for containing surface treating agent. The cartridge also has an interfacial portion (107) for interfacing with the volume displacement device during attachment of the cartridge to define a dosing assembly (108). At least one one-way valve (116, 120) is configured to enable fluid to exit the chamber and/or the dosing assembly by operation of the volume displacement device, and restrict passage of the surface treating agent therethrough prior to attachment of the cartridge. Further provided a cleaning assembly comprising a cartridge and a wet cleaning apparatus.

## Description

### FIELD OF THE INVENTION

The present invention relates to a cartridge attachable to a wet cleaning apparatus, such as a wet floor cleaning apparatus. The present invention further relates to a wet cleaning assembly comprising such a cartridge and wet cleaning apparatus.

### BACKGROUND OF THE INVENTION

Flooring is traditionally cleaned using a mop and bucket. However, a growing number of wet cleaning devices seek to replace such a mop and bucket. Both manually operated and electrically powered wet cleaning devices have been proposed.

Such wet cleaning devices tend to include a cleaning liquid tank, in other words a reservoir that contains cleaning liquid which is to be delivered to the surface to be cleaned.

In some cases, a pre-mixed solution of surface treating agent, e.g. detergent, and water is used to fill the reservoir. When the reservoir is empty, it can be refilled with more pre-mixed solution. There are wet cleaning devices which have a reservoir which can be filled by the user with water, and the user can add their own surface treating agent to the water in the reservoir. In the latter case, difficulties have been encountered in controlling the ratio between water and surface treating agent to create a cleaning solution having a suitable concentration of surface treating agent.

The capacity of the reservoir may be limited compared to the old-fashioned bucket. This can mean that surface treating agents formulated for addition to such a bucket, which can hold are larger volume of water for diluting the surface treating agent, are inappropriate for addition to a wet cleaning device's reservoir because the concentration of such surface treating agents is too high.

Using a cleaning solution with an excessive concentration of surface treating agent can hamper/damage the wet cleaning device or result in a sub-optimal cleaning result. This issue can be alleviated by the user being instructed to first add a limited amount of surface treating agent into a dosing cup with a defined volume, and transfer this amount of surface treating agent to the reservoir. However, this additional step tends to be inconvenient for the user.

It becomes even more inconvenient when the surface treating agent is relatively highly concentrated, since the user is burdened with having to be very precise in dosing relatively small amounts of the surface treating agent to the reservoir.

### SUMMARY OF THE INVENTION

The invention is defined by the claims.

According to examples in accordance with a first aspect of the invention, there is provided a cartridge attachable to a wet cleaning apparatus, the wet cleaning apparatus having a volume displacement device for dosing surface treating agent from the cartridge, the cartridge comprising: a chamber for containing surface treating agent; an interfacial portion for interfacing with the volume displacement device to define a dosing assembly during attachment of the cartridge; and at least one one-way valve configured to: enable fluid to exit the chamber or to exit the chamber and the dosing assembly by operation of the volume displacement device; and restrict passage of the surface treating agent therethrough prior to attachment of the cartridge.

The inclusion of the one-way valve(s) may facilitate dosing, e.g. metered dosing, of the surface treating agent, whilst also assisting with safe and reliable storage and/or transportation of the cartridge with the surface treating agent present in the chamber. Such attributes may render the cartridge particularly advantageous in respect of containing and dosing relatively highly concentrated surface treating agents. This is because of the one-way valve(s) assisting to lower risks associated with storage, transportation and inadvertent use of excessive amounts, during operation of the wet cleaning apparatus, of such highly concentrated surface treating agents.

It is further noted that the one-way valve(s) may be a component or components more susceptible to wear and degradation over the operating lifetime of a wet cleaning assembly comprising the wet cleaning apparatus and the cartridge. Accordingly, by including the one-way valve(s) in the cartridge, e.g. a disposable cartridge, the one-way valve(s) can be straightforwardly replaced at the same time as replenishing the surface treating agent. Thus, replenishment of the surface treating agent can be advantageously combined with preventative maintenance of the wet cleaning assembly.

The interfacial portion of the cartridge may be arranged relative to one or more of the one-way valve(s) such that, when the dosing assembly is defined by the interfacial portion interfacing with the volume displacement device, one or more of the one-way valve(s) cooperate with the volume displacement device, for example by interfacing with a port of the volume displacement device through which fluid is transportable.

In some embodiments, the cartridge is attachable to a cleaning liquid tank of the wet cleaning apparatus, with surface treating agent exiting the dosing assembly being receivable in the cleaning liquid tank. In such embodiments, the surface treating agent may be dosed via the dosing assembly into the cleaning liquid tank, whereupon the surface treating agent may be diluted with cleaning liquid contained in the cleaning liquid tank.

In some embodiments, the cartridge is included in or is attachable to a cover for closing the cleaning liquid tank.

This may provide a convenient way of positioning the cartridge. By the cover being, in use, arranged above the cleaning liquid tank when the cleaning liquid tank is closed by the cover, the surface treating agent from the cartridge included in the cover may be assisted by gravity to reach diluting cleaning liquid, e.g. water, in the cleaning liquid tank.

In some embodiments, the at least one one-way valve comprises a first one-way valve configured to enable fluid to be moved out of the chamber or to be moved into the chamber by the operation of the volume displacement device.

The first one-way may assist to retain the surface treating agent within the chamber when the cartridge is not attached to the wet cleaning apparatus whilst also facilitating dosing, e.g. metered dosing, of the surface treating agent from the chamber by operation of the volume displacement device.

For example, the first one-way valve is selected from an umbrella valve, a duckbill valve, or a ball check valve.

It is noted that the ball check valve may comprise a ball member resiliently mounted to a valve seat.

The resilient mounting of the ball member to the valve seat may be implemented in any suitable manner, such as by a spring element connecting the ball member to the valve seat.

For instance, the ball check valve may comprise, e.g. be, a spring-loaded ball valve, for example where the spring is formed from a metallic or polymeric material.

In a non-limiting example, the spring element may be formed from a polymer material connecting a ball member formed of a polymer material to a valve seat formed of a polymer material. In such an example, the ball check valve may be formed as a unitary piece of the polymer material.

The first one-way valve may have a standard design. Alternatively, the first one-way valve may have a custom design that adapts the first one-way valve for application in the cartridge.

The above-described spring element formed from a polymer material connecting a ball member formed of a polymer material to a valve seat formed of a polymer material, e.g. formed as a unitary piece, can be regarded as an example of a custom design for the first one-way valve.

As an alternative or in addition to the at least one one-way valve comprising the first one-way valve, the at least one one-way valve may include a second one-way valve configured to enable fluid to exit the dosing assembly.

The second one-way valve may facilitate dosing, e.g. metered dosing, of the surface treating agent from the chamber by operation of the volume displacement device, whilst also assisting to retain the surface treating agent within the chamber when the cartridge is not attached to the wet cleaning apparatus.

For example, the second one-way valve is selected from an umbrella valve, a duckbill valve, or a ball check valve.

It is reiterated that the ball check valve may comprise a ball member resiliently mounted to a valve seat, as described above in relation to the first one-way valve.

The second one-way valve may have a standard design. Alternatively, the second one-way valve may have a custom design that adapts the second one-way valve for application in/with the cartridge.

The above-described spring element formed from a polymer material connecting a ball member formed of a polymer material to a valve seat formed of a polymer material, e.g. formed as a unitary piece, can be regarded as an example of a custom design for the second one-way valve.

In some embodiments, the cartridge comprises a combination valve that integrates the first one-way valve and the second one-way valve. Such a combination valve may assist to simplify assembly of the cartridge.

In some embodiments, the combination valve comprises the first one-way valve in the form of an umbrella valve, and the second one-way valve in the form of a duckbill valve.

In a first set of embodiments, the first one-way valve is configured to enable fluid to be moved out of the chamber by a first action of the volume displacement device, and the second one-way valve is configured to enable the fluid moved out of the chamber by the first action to exit the dosing assembly by a second action of the volume displacement device.

In the first set of embodiments, the cartridge may comprise an air vent for admitting air into the chamber while the fluid is being moved out of the chamber via the first one-way valve during the first action of the volume displacement device.

As an alternative to such an air vent, a flexible or collapsible housing may delimit the chamber, which housing may flex or collapse to reduce the volume of the chamber in response to the first action of the volume displacement device.

For example, the housing may be configured to collapse more, in other words keep on collapsing, with each successive first action of the volume displacement device.

In a second set of embodiments, the first one-way valve is configured to enable fluid to be moved into the chamber by the operation of the volume displacement device, and the second one-way valve is configured to enable fluid displaced by the fluid moved into the chamber to exit the cartridge.

In this second set of embodiments, the first one-way valve and the second one-way valve may be spatially separated from each other across the chamber. This arrangement of the first one-way valve and the second one-way valve may facilitate dosing of the surface treating agent, e.g. into the cleaning liquid tank beneath the second one-way valve.

In some embodiments, the cartridge comprises an upper end at or proximal to which the interfacial portion is provided, and a lower end opposing the upper end, with the at least one one-way valve, e.g. the second one-way valve, being arranged such that the fluid exits from the dosing assembly in a direction away from the upper end. Such an arrangement of the at least one one-way valve may facilitate dosing of the surface treating agent, particularly in embodiments in which the cartridge is included in or is attachable to the cover for closing the cleaning liquid tank.

In some embodiments, the chamber has an annular shape that extends around a fluid passage that is external to the chamber. In such embodiments, the fluid passage extends between an upper end and a lower end of the cartridge, with the at least one one-way valve, e.g. the second one-way valve, being arranged at or proximal to the upper end.

Such a fluid passage may facilitate direct delivery of the surface treating agent to the exterior of the chamber. Thus, the surface treating agent may be more efficiently delivered, in other words with less possibility of incomplete delivery of the surface treating agent, from the dosing assembly. The annular chamber- and fluid passage-comprising cartridge may be particularly suitable in respect of the above-described first set of embodiments.

In some embodiments, the cartridge comprises a covering assembly for covering the at least one one-way valve, e.g. the first one-way valve and/or the second one-way valve, prior to the attachment of the cartridge, with the covering assembly being configured to enable the interfacial portion to be accessed in order to permit the interfacial portion to be interfaced with the volume displacement device.

The covering assembly may include a seal, e.g. a removable and/or pierceable seal, for sealingly covering the at least one one-way valve prior to the attachment of the cartridge.

The covering assembly may provide further protection, to supplement that provided by the at least one one-way valve, against leakage of the surface treating agent prior to attachment of the cartridge to the wet cleaning apparatus. Such leakage may, for example, otherwise occur due to pressure and/or temperature variations during transport of the cartridge. The covering assembly may further assist to provide tamper protection and/or protection of the at least one one-way valve during storage and transportation of the cartridge.

As an alternative or in addition to the covering assembly covering the at least one one-way valve, the covering assembly may cover an air vent of the cartridge prior to attachment of the cartridge but enable the air vent to be exposed to allow air to enter the chamber when fluid is being drawn out of the chamber, e.g. by the first action of the volume displacement device.

In such embodiments, the covering assembly may include a seal, e.g. a removable and/or pierceable seal, for sealingly covering the air vent.

In some embodiments, the covering assembly comprises a unitary covering member that covers the air vent along with the at least one one-way valve.

This may facilitate attachment of the cartridge, since only the unitary covering member may be manipulated, e.g. peeled and/or pierced, in order to access the interfacial portion and expose the air vent.

More generally, the interfacial portion of the cartridge may include a coupling part for coupling the cartridge to the wet cleaning apparatus.

The interfacial portion may further include a sealing area which provides the cartridge's contribution to a sealed region at an interface between the attached cartridge and the volume displacement device for restricting leakage of the surface treating agent.

The coupling part may include, e.g. be, a bayonet coupling part, a click connection coupling part or a threaded connection coupling part for attaching the cartridge to a complementary coupling part included in the wet cleaning apparatus.

In embodiments in which the cartridge comprises the covering assembly, the covering assembly, e.g. the covering assembly comprising the unitary covering member, such as a cap, that covers the air vent and the at least one one-way valve, may include a further complementary coupling part for coupling to the coupling part when the cartridge is not attached to the wet cleaning apparatus.

In such embodiments, the complementary coupling part of the wet cleaning apparatus may correspond to the further complementary coupling part of the covering assembly, e.g. cap.

This may facilitate attachment of the cartridge to the wet cleaning apparatus, since the same coupling principle may be used in the attachment/detachment of the covering assembly, e.g. cap, to cover/expose the interfacial portion as in the attachment/detachment of the cartridge to the wet cleaning apparatus.

In at least some embodiments, the cartridge is disposable.

Such a disposable cartridge may be discarded by a user of the wet cleaning assembly, e.g. once the surface treating agent in the chamber has become sufficiently depleted and/or the used disposable cartridge is detached from the wet cleaning apparatus.

Alternatively or additionally, the surface treating agent is included in the cartridge.

In such embodiments, the surface treating agent included in the cartridge, e.g. contained in the chamber of the cartridge as-received by the user, may be a liquid surface treating agent.

By supplying the cartridge, e.g. disposable cartridge, with such a liquid surface treating agent, the user may begin using the wet cleaning assembly with minimal preparatory steps being required.

In alternative embodiments, the surface treating agent included in the cartridge, e.g. contained in the chamber of the cartridge as-received by the user, may be a solid surface treating agent composition.

In such alternative embodiments, the solid surface treating agent composition may be diluted and/or dissolved, e.g. using water, by the user prior to attachment of the cartridge, e.g. disposable cartridge, to the wet cleaning apparatus.

Whilst supplying the cartridge, e.g. disposable cartridge, with such a solid surface treating agent composition may add a preparatory step, in the form of diluting and/or dissolving the solid surface treating agent composition, the cartridge may be made lighter due to the surface treating agent not being supplied pre-diluted/dissolved. The latter may assist to reduce transportation costs.

More generally, the surface treating agent can include any suitable type of reagent for treating, e.g. cleaning, a surface. Particular mention is made of detergent being included in the surface treating agent.

It is noted that the term "fluid" as used herein can refer, depending on the context, to a gas, e.g. air, and/or a liquid, e.g. the liquid surface treating agent.

According to a further aspect there is provided a wet cleaning assembly comprising: a wet cleaning apparatus comprising a volume displacement device; a cartridge including a chamber for containing surface treating agent, and an interfacial portion for interfacing with the volume displacement device to define a dosing assembly during attachment of the cartridge to the wet cleaning apparatus; a first one-way valve configured to either enable fluid to be moved out of the chamber or to be moved into the chamber by operation of the volume displacement device; and a second one-way valve configured to enable fluid to exit the dosing assembly, wherein the first one-way valve and/or the second one-way valve is or are included in the cartridge and configured to enable restriction of passage of the surface treating agent therethrough prior to attachment of the cartridge.

The cartridge included in the wet cleaning assembly can be the cartridge of any of the embodiments described above in relation to the first aspect.

In some embodiments, the first one-way valve is included in the cartridge, and the second one-way valve is included in the wet cleaning apparatus.

For example, the second one-way valve is included in the volume displacement device.

In some embodiments, the wet cleaning assembly further comprises a cleaning liquid tank for receiving surface treating agent exiting the dosing assembly via the second one-way valve.

In some embodiments, the volume displacement device comprises a resiliently compressible container whose resilient compression at least partly defines the operation of the volume displacement device.

In some embodiments, the resiliently compressible container is at least partly delimited by an optically transmissive wall to allow viewing of fluid inside the resiliently compressible container. The user may thus have a visual indication of whether surface treating agent is being dosed.

In some embodiments, the surface treating agent is colored.

In relation to the above-described second set of embodiments, the first and second one-way valves may be arranged such that compression of the resiliently compressible container moves fluid into the chamber via the first one-way valve and fluid displaced by the fluid moved into the chamber exits the cartridge via the second one-way valve.

In relation to the above-described first set of embodiments, the first and second one-way valves may be arranged such that, during recovery to a resting shape of the resiliently compressible container following compression, fluid is moved out of the chamber via the first one-way valve, and during subsequent compression of the resiliently compressible container the fluid drawn out of the chamber is caused to exit the dosing assembly via the second valve.

In some embodiments, dosing of the surface treating agent from the cartridge is triggered by mounting of the cleaning liquid tank, e.g. together with the dosing assembly, in the wet cleaning assembly.

The dosing of the surface treating agent may thus be regarded as being implemented in a semi-automatic manner.

In such embodiments, the mounting of the cleaning liquid tank may comprise an engagement feature of the wet cleaning assembly engaging with the volume displacement device during the mounting to cause dosing of the surface treating agent.

For example, the mounting of the cleaning liquid tank may cause the engagement feature of the wet cleaning assembly to compress the resiliently compressible container when the cleaning liquid tank, e.g. together with the dosing assembly, is positioned in the wet cleaning assembly.

In some embodiments, the volume displacement device comprises an electrically powered volume displacement device.

In such embodiments, the electrically powered volume displacement device may be arranged to implement automatic dosing of surface treating agent from the cartridge.

In some embodiments, the volume displacement device may be covered by a housing portion of the wet cleaning apparatus. This housing portion may block access to the volume displacement device, e.g. the resiliently compressible container.

This may assist to prevent unintentional operation of the volume displacement device.

The wet cleaning assembly may comprise one or more of a wet mopping device, a wet vacuum cleaner, a window cleaner, and a sweeper.

Alternatively or additionally, the wet cleaning assembly comprises a robotic wet cleaning device configured to move autonomously over a surface to be cleaned.

In some embodiments, the wet cleaning apparatus includes a base station comprising the cleaning liquid tank, and the wet cleaning assembly comprises a wet floor cleaning device, such as the robotic wet cleaning device, that is provided with cleaning liquid from the cleaning liquid tank in the base station.

In such embodiments, the dosing of the surface treating agent from the cartridge attached to the wet cleaning apparatus may be into the cleaning liquid tank included in the base station of the wet cleaning apparatus. However, the dispensing of the cleaning liquid onto the surface to be cleaned may be by the wet cleaning device that is provided with cleaning liquid from the cleaning liquid tank in the base station.

In some embodiments, the robotic wet cleaning device may be configured to autonomously return, e.g. repeatedly autonomously return, to the base station to obtain more cleaning liquid comprising the surface treating agent for applying to the surface to be cleaned.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a wet cleaning assembly according to a first example;
FIG. 2 schematically depicts a wet cleaning assembly according to a second example;
FIG. 3A schematically depicts a wet cleaning assembly according to a third example in a partially disassembled state;
FIG. 3B shows the wet cleaning assembly shown in FIG. 3A when assembled;
FIG. 4A schematically depicts a wet cleaning assembly according to a fourth example in a partially disassembled state;
FIG. 4B shows the wet cleaning assembly shown in FIG. 4A when assembled;
FIG. 5 provides a cross-sectional view of a dosing assembly according to a first example;
FIG. 6 provides a cross-sectional view of a dosing assembly according to a second example;
FIG. 7 schematically depicts one-way valves of a cartridge according to an example;
FIG. 8 schematically depicts a volume displacement device according to an example;
FIG. 9A provides a cross-sectional view of a dosing assembly according to a third example;
FIG. 9B shows a cartridge and a volume displacement device of the dosing assembly shown in FIG. 9A when the cartridge is detached from the volume displacement device;
FIG. 10A provides a view of a cartridge and a volume displacement device when detached from each other;
FIG. 10B shows the cartridge and the volume displacement device shown in FIG. 10A when attached to each other;
FIGs. 11A to 11C provide views of a cartridge comprising a covering assembly according to an example;
FIG. 12 shows part of a cartridge comprising a covering assembly according to another example;
FIG. 13A provides a cross-sectional view of a cartridge that has a one-way valve;
FIG. 13B provides a perspective exploded view of the cartridge shown in FIG. 13A;
FIG. 14 provides a cross-sectional view of a dosing assembly comprising a volume displacement device and the cartridge shown in FIGs. 13A and 13B; and
FIG. 15 provides a cross-sectional view of another cartridge that has a one-way valve.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a cartridge attachable to a wet cleaning apparatus, in particular a wet floor cleaning apparatus. The wet cleaning apparatus has a volume displacement device for dosing surface treating agent from the cartridge when the cartridge is attached to the wet cleaning apparatus. The cartridge comprises a chamber for containing surface treating agent. The cartridge also has an interfacial portion for interfacing with the volume displacement device during attachment of the cartridge to define a dosing assembly. At least one one-way valve is configured to enable fluid to exit the chamber and/or the dosing assembly by operation of the volume displacement device, and restrict passage of the surface treating agent therethrough prior to attachment of the cartridge. Further provided is a cleaning assembly comprising a cartridge and a wet cleaning apparatus.

The inclusion of the one-way valve(s) may facilitate dosing, e.g. metered dosing, of the surface treating agent, whilst also assisting with safe and reliable storage and/or transportation of the cartridge with the surface treating agent present in the chamber. Such attributes may render the cartridge particularly advantageous in respect of containing and dosing relatively highly concentrated surface treating agents. This is because of the one-way valve(s) assisting to lower risks associated with storage, transportation and inadvertent use of excessive amounts, during operation of the wet cleaning apparatus, of such highly concentrated surface treating agents.

It is noted that the term "metered dosing" as used herein may refer to a consistent or accurate quantity, e.g. volume, of the surface treating agent being dosed in each operation of the volume displacement device.

The one-way valve(s) may be a component or components more susceptible to wear and degradation over the operating lifetime of a wet cleaning assembly comprising the wet cleaning apparatus and the cartridge. For example, the one-way valve(s) may have an expected lifetime of around six months. Accordingly, by including the one-way valve(s) in the cartridge, e.g. a disposable cartridge, the one-way valve(s) can be straightforwardly replaced at the same time as replenishing the surface treating agent. Thus, replenishment of the surface treating agent can be advantageously combined with preventative maintenance of the wet cleaning assembly.

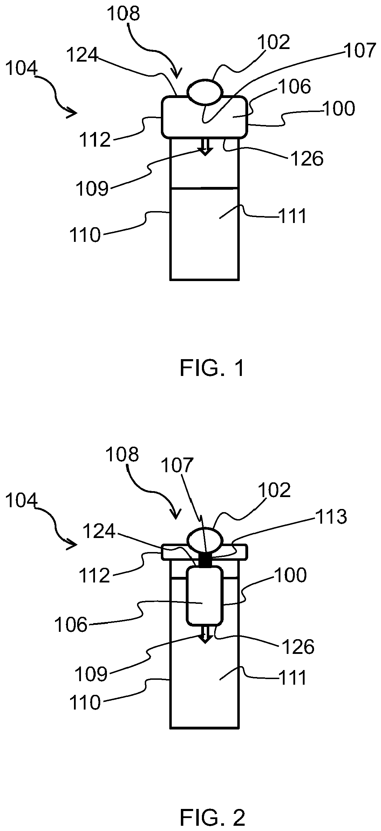

FIG. 1 schematically depicts a cartridge 100 attached to a wet cleaning apparatus, e.g. a wet floor cleaning apparatus. The wet cleaning apparatus comprises a volume displacement device 102. A wet cleaning assembly 104, e.g. a wet floor cleaning assembly 104, may include the cartridge 100 and the wet cleaning apparatus, e.g. the wet floor cleaning apparatus.

In some embodiments, the wet cleaning assembly 104 comprises a wet floor cleaning apparatus that includes, e.g. is in the form of, a wet mopping device, a wet vacuum cleaner, a window cleaner, and/or a sweeper.

Alternatively or additionally, the wet cleaning assembly 104 comprises a robotic wet cleaning device configured to move autonomously over a surface to be cleaned.

The cartridge 100 has a chamber 106 for containing surface treating agent. The surface treating agent (not visible in the Figures) is suitable for treating a surface to be cleaned, such as a floor.

The cartridge 100 is attachable, for example detachably couplable, to the wet cleaning apparatus to enable replenishing of the surface treating agent once the surface treating agent in the chamber 106 has become sufficiently depleted, for instance once the chamber 106 has been emptied of surface treating agent.

In at least some embodiments, the cartridge 100 is a disposable cartridge 100.

Such a disposable cartridge 100 may be discarded by a user of the wet cleaning assembly 104, e.g. once the surface treating agent in the chamber 106 has become sufficiently depleted and/or the used disposable cartridge 100 is detached from the wet cleaning apparatus.

As an alternative or in addition to the cartridge 100 being a disposable cartridge 100, the cartridge 100 may comprise the surface treating agent. In other words, the surface treating agent may be supplied to the user together with the cartridge 100, e.g. disposable cartridge 100.

In such embodiments, the surface treating agent included in the cartridge 100, e.g. contained in the chamber 106 of the cartridge 100 as-received by the user, may be a liquid surface treating agent.

By supplying the cartridge 100, e.g. disposable cartridge 100, with such a liquid surface treating agent, the user may begin using, with few preparatory steps, the wet cleaning assembly 104 comprising the cartridge 100.

In alternative embodiments, the surface treating agent included in the cartridge 100, e.g. contained in the chamber 106 of the cartridge 100 as-received by the user, may be a solid surface treating agent composition.

In such alternative embodiments, the solid surface treating agent composition may be diluted and/or dissolved, e.g. using water, by the user prior to attachment of the cartridge 100, e.g. disposable cartridge 100, to the wet cleaning apparatus.

Whilst supplying the cartridge 100, e.g. disposable cartridge 100, with such a solid surface treating agent composition may add a preparatory step, in the form of diluting and/or dissolving the solid surface treating agent composition, the cartridge 100 may be made lighter due to the surface treating agent not being supplied pre-diluted/dissolved. The latter may assist to reduce transportation costs.

More generally, the surface treating agent can include any suitable type of reagent for treating, e.g. cleaning, a surface. Particular mention is made of detergent being included in the surface treating agent.

A housing of the cartridge 100 may define, in other words delimit, the chamber 106.

Such a housing may be formed of any suitable material capable of retaining surface treating agent within the chamber 106. In at least some embodiments, the housing is formed of a plastic material, such as a thermoplastic material.

The plastic material may, for example, comprise a polyolefin, e.g. polyethylene or polypropylene, or a polyester, e.g. polyethylene terephthalic acid. It is noted that such polyolefinic and polyester materials may be thermoplastic in nature.

In embodiments in which the cartridge 100 is a disposable cartridge 100, the housing may be formed of a recyclable or reusable material, such as a recyclable or reusable plastic material, e.g. thermoplastic material.

Any suitable recyclable or reusable plastic material may be contemplated, such as a polyolefin, e.g. polyethylene or polypropylene, or a polyester, e.g. polyethylene terephthalic acid.

In some embodiments, the housing is at least partly formed of an optically transmissive material to enable the surface treating agent in the chamber 106 to be viewed through the housing.

The surface treating agent may also be colored to facilitate viewing of the surface treating agent, e.g. to permit the user to assess how much of the surface treating agent is left inside the chamber 106. A color of the surface treating agent may, for instance, be selected to contrast with the optically transmissive material to facilitate viewing of the surface treating agent.

The cartridge 100 may include information concerning the surface treating agent, e.g. detergent. Such information may, for example, be applied to an external surface of the housing, e.g. via a sticker, tampon printing, laser engraving, etc.

In embodiments in which the cartridge 100 comprises, in other words is supplied with, the surface treating agent, the surface treating agent may be dispensed into the chamber 106, for instance by filling the chamber 106 from the bottom, followed by closing the cartridge 100. A seal is preferably formed where the cartridge 100 is closed.

The cartridge 100 may be closed, e.g. sealingly closed, in any suitable manner, such as via a welding technique in which a first portion of the cartridge 100 comprising the chamber 106 filled with surface treating agent is welded to a second portion of the cartridge 100 in order to close the chamber 106.

In embodiments in which the cartridge 100 is closed via a weld between first and second portions of the cartridge 100, any suitable welding technique may be contemplated. Particular mention is made of ultrasonic welding, particularly in the scenario in which the housing that defines the chamber 106 is formed from a thermoplastic.

The localized generation of heat associated with ultrasonically welding the first and second portions of the cartridge 100 to each other may assist to minimize or avoid degradation of surface treating agent during the welding process. The ultrasonic weld may also provide a relatively robust seal between the first and second portions of the cartridge 100.

The chamber 106 may have a volume in the range of 2.5 mL to 1000 mL, preferably 30 mL to 50 mL.

The volume may be selected according to a concentration of the surface treating agent to provide a sufficiently long operating lifetime of the cartridge 100 combined with a suitably compact design of the cartridge 100. The latter can facilitate storage and transportation of the cartridge 100 prior to being received by the user.

More generally, the cartridge 100 includes an interfacial portion 107 for interfacing with the volume displacement device 102 of the wet cleaning apparatus to define a dosing assembly 108 during attachment of the cartridge 100 to the wet cleaning apparatus. The surface treating agent may be dosed via the dosing assembly 108, as schematically represented by the arrow 109 in FIG. 1, once the interfacial portion 107 is interfaced with the volume displacement device 102.

In at least some embodiments, the interfacial portion 107 is a single interfacial portion 107 that defines the only interface between the cartridge 100 and the wet cleaning apparatus.

This may facilitate, in particular simplify, attachment of the cartridge 100 to the wet cleaning apparatus.

In some embodiments, such as that shown in FIG. 1, the cartridge 100 is attachable to a cleaning liquid tank 110 of the wet cleaning apparatus.

In such embodiments, the surface treating agent may be dosed via the dosing assembly 108 into the cleaning liquid tank 110, whereupon the surface treating agent may be diluted with the cleaning liquid 111, e.g. cleaning liquid 111 comprising water, contained in the cleaning liquid tank 110.

The cleaning liquid tank 110 may, for example, be filled with water from any tap in a house, with the cartridge 100 providing convenience associated with the user not being required to take a stock bottle of surface treating agent with them on each visit to such a tap, and also not being required to locate such a stock bottle on each cleaning liquid tank 110 (re)filling occasion, and locate a dosing cup for transferring a specified quantity from the stock bottle to the cleaning liquid tank 110.

In embodiments in which the wet cleaning assembly 104 comprises a wet floor cleaning apparatus, the cleaning liquid 111 may be floor cleaning liquid 111, for example an aqueous floor cleaning liquid 111.

In such embodiments, the wet floor cleaning apparatus, or a wet cleaning device included in the wet floor cleaning apparatus, may be configured to deliver the floor cleaning liquid 111 onto the surface to be cleaned using the wet floor cleaning apparatus.

The cleaning liquid tank 110 may have a volume of 100 mL to 2500 mL, such as 100 mL to 1000 mL.

Such a volume of the cleaning liquid tank 110 may facilitate relatively prolonged wet cleaning using the wet cleaning apparatus, e.g. wet floor cleaning apparatus, in which the cleaning liquid tank 110 is included.

The volume of the cleaning liquid tank 110 may at least partly depend on whether or not the cleaning liquid tank 110 is itself moved, e.g. together with the wet cleaning device, over the surface to be cleaned.

In some embodiments, the wet cleaning apparatus includes a base station comprising the cleaning liquid tank 110, and the wet cleaning assembly 104 comprises a wet floor cleaning device, such as the robotic wet cleaning device, that is provided with cleaning liquid from the cleaning liquid tank 110 in the base station.

In such embodiments, the dosing of the surface treating agent from the cartridge 100 attached to the wet cleaning apparatus may be into the cleaning liquid tank 110 included in the base station of the wet cleaning apparatus. However, the dispensing of the cleaning liquid onto the surface to be cleaned may be by the wet cleaning device that is provided with cleaning liquid from the cleaning liquid tank 110 in the base station.

In some embodiments, the robotic wet cleaning device may be configured to autonomously return, e.g. repeatedly autonomously return, to the base station to obtain more cleaning liquid comprising the surface treating agent for applying to the surface to be cleaned.

In embodiments in which the cleaning liquid tank 110 is included in the base station, e.g. the base station to which the robotic wet cleaning device returns, the volume of the cleaning liquid tank 110 may be up to 2500 mL.

In at least some embodiments, the volume displacement device 102 is configured to permit control to be exerted over an amount of surface treating agent dosed from the cartridge 100.

This may enhance convenience of use, for example relative to manual dosing of surface treating agent from a stock bottle of surface treating agent.

In such embodiments, the volume displacement device 102 may be arranged such that operation of the volume displacement device 102 causes a specified amount of surface treating agent to be dosed from the cartridge 100, e.g. into the cleaning liquid tank 110.

The capability to dose a specified, e.g. an exact, amount of surface treating agent from the cartridge 100 may permit use of relatively highly concentrated surface treating agents, because the risks associated with using excessive amounts of such highly concentrated surface treating agents during operation of the wet cleaning apparatus can correspondingly be minimized.

The capability to use relatively highly concentrated surface treating agents may, in turn, assist to minimize the size of the cartridge 100, with concomitant storage and transportation benefits, as well as less space being occupied by the cartridge 100 in the wet cleaning assembly 104.

In some embodiments, the volume displacement device 102 is arranged to dose, in each operation of the volume displacement device 102, a volume in the range of 0.5 mL to 10 mL from the cartridge 100.

This range may provide a sufficient quantity of surface treating agent, noting the relatively high surface treating agent concentrations enabled by the design of the cartridge 100 according to the present disclosure.

In some embodiments, the volume displacement device 102 is arranged to dose, in each operation of the volume displacement device 102, a volume in the range of 0.5 mL to 10 mL from the cartridge 100, and the cartridge 100 contains between 5 and 100 doses having this volume.

Thus, the cartridge 100 and the volume displacement device 102 may enable multiple refilling of the cleaning liquid tank 110, e.g. with the cleaning liquid tank 110 itself having a volume of 100 mL to 1000 mL.

In some embodiments, the cartridge 100 contains a sufficient amount of surface treating agent, e.g. detergent, for 30 to 50 doses, in other words 30 to 50 operations of the volume displacement device 102.

In such embodiments, a relatively highly concentrated surface treating agent, e.g. detergent, may be employed where approximately 1 mL of detergent is sufficient for 300 mL to 400 mL of water. The chamber 106 may therefore have a volume of 30 mL to 50 mL.

In some embodiments, such as that shown in FIG. 1, the cartridge 100 is included in, e.g. defines, a cover or lid 112 for closing the cleaning liquid tank 110.

This may provide a convenient way of integrating the cartridge 100 in the wet cleaning assembly 104. By the cover 112 being arranged above the cleaning liquid tank 110 when the cleaning liquid tank 110 is closed by the cover 112 and the wet cleaning assembly 104 is orientated for use, the surface treating agent from the cartridge 100 included in the cover 112 may be assisted by gravity to reach liquid 111, e.g. water, in the cleaning liquid tank 110.

In alternative embodiments, such as that shown in FIG. 2, the cartridge 100 is attachable to such a cover 112, e.g. a lid, for closing the cleaning liquid tank 110.

The cleaning liquid tank 110 may be filled with liquid 111, e.g. water, up to the cartridge 100, or the cartridge 100 can be in direct contact with the liquid 111.

It is noted that there may be a single fixed position for the cartridge 100 when the cartridge 100 is attached to the wet cleaning apparatus, e.g. by being placed in the cleaning liquid tank 110.

More generally, the interfacial portion 107 of the cartridge 100 may include a coupling part 113 for coupling the cartridge 100 to the wet cleaning apparatus.

The coupling part 113 can have any suitable design. In some embodiments, the coupling part 113 comprises part of a bayonet, click connection or screw thread coupling.

In other words, the cartridge 100 may include a bayonet coupling part 113, a click connection coupling part 113 or a threaded connection coupling part 113 for attaching the cartridge 100 to a complementary coupling part included in the wet cleaning apparatus.

In some embodiments, the cartridge 100 includes a coupling part 113 configured to provide tactile feedback upon attachment to a complementary coupling part included in the wet cleaning apparatus.

Thus, the user may be provided with a tactile response that informs him/her that the cartridge 100 is attached to the wet cleaning apparatus.

The above-mentioned bayonet coupling part and click connection coupling part 113 may be examples of a coupling part 113 configured to provide tactile feedback upon attachment to a complementary coupling part included in the wet cleaning apparatus.

Alternatively or additionally, the coupling part 113 may be arranged to attach to the complementary coupling part of the wet cleaning apparatus in a unidirectional manner.

This may assist to minimize user confusion when attaching the cartridge 100 to the wet cleaning apparatus.

In embodiments, such as that shown in FIG. 2, in which the cartridge 100 is attachable to the cover 112 for closing the cleaning liquid tank 110, the coupling part 113 may extend from the cartridge 100 to the cover 112. Such a coupling part 113 may include the above-described bayonet, click connection or screw thread.

In such embodiments, the cartridge 100 may hang from the cover 112 and extend in the inside of the cleaning liquid tank 110.

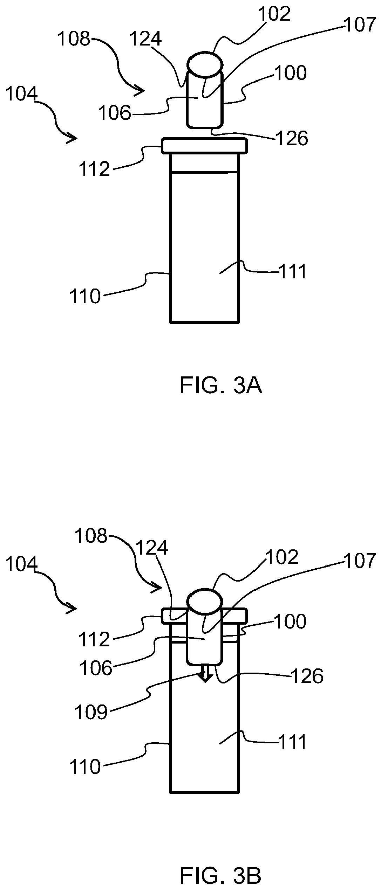

In some embodiments, such as that shown in FIGs. 3A and 3B, the dosing assembly 108, comprising the cartridge 100 and the volume displacement device 102, may be attachable to and/or detachable from the cover 112.

In such embodiments, the interfacial portion 107 of the cartridge 100 may be interfaced with the volume displacement device 102 to provide the dosing assembly 108, and the dosing assembly 108 may be attached to the cover 112 in a separate, e.g. subsequent, step. The former is shown in FIG. 3A, and the resultant wet cleaning assembly 104 is shown in FIG. 3B.

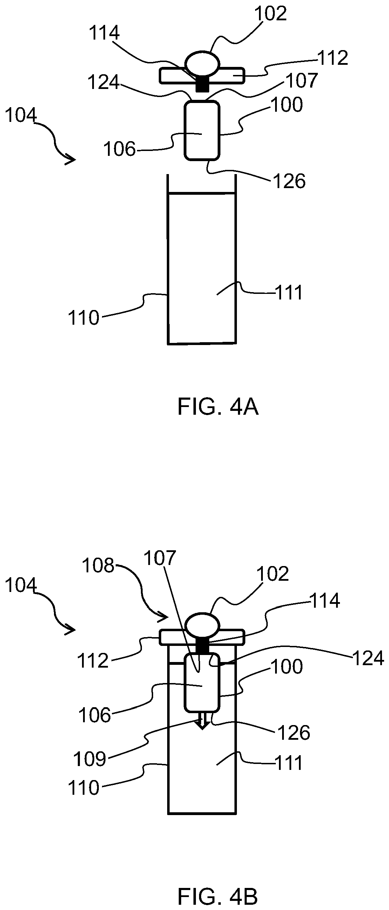

In alternative embodiments, such as that shown in FIGs. 4A and 4B, the volume displacement device 102 may be included in the cover 112, and the cartridge 100 may be interfaced with the volume displacement device 102 to provide the dosing assembly 108 while the cover 112 and the volume displacement device 102 are attached to each other, as shown in FIG. 4A. The cover 112, to which the dosing assembly 108 is attached, may then be placed on, thereby to close, the cleaning liquid tank 110, as shown in FIG. 4B.

Evident in FIGs. 4A and 4B, albeit schematically, is the complementary coupling part 114 to which the coupling part 113 of the cartridge 100 is couplable to secure the interface between the interfacial portion 107 and the volume displacement device 102.

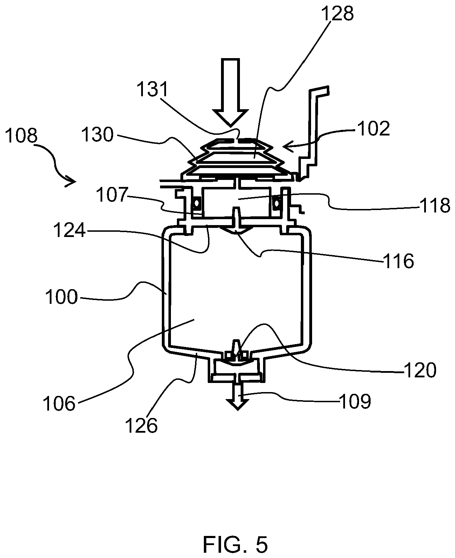

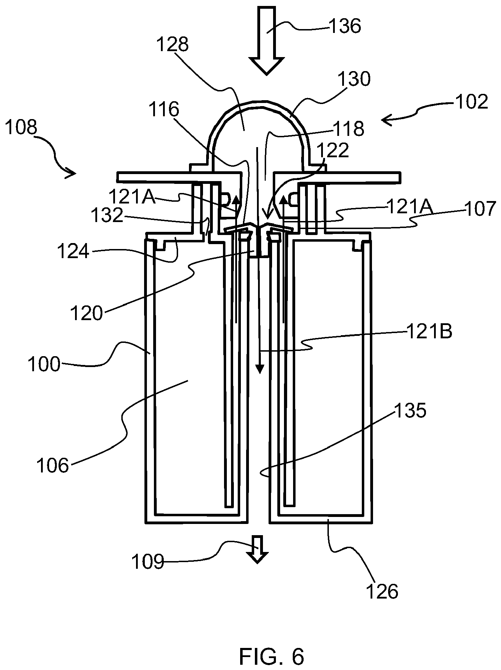

More generally, and referring to FIGs. 5 and 6, the cartridge 100 comprises at least one one-way valve 116, 120 configured to enable fluid to exit the chamber 106 or to exit the chamber 106 and the dosing assembly 108. Moreover, the at least one one-way valve 116, 120 enables restriction of passage of the surface treating agent through the at least one one-way valve 116, 120 prior to attachment of the cartridge 100. Thus, the at least one one-way valve 116, 120 may assist in retaining the surface treating agent within the chamber 106 when the cartridge 100 is not attached to the wet cleaning apparatus, e.g. during storage or transportation of the cartridge 100.

In some embodiments, the at least one one-way valve 116, 120 comprises a first one-way valve 116 configured to enable fluid to be moved out of the chamber 106 or to be moved into the chamber 106 by the operation of the fluid displacement device 102.

Non-limiting examples of such a first one-way valve 116 include an umbrella valve, as shown in FIGs. 5 and 6, a duckbill valve, or a ball check valve.

The first one-way valve 116 may assist to retain the surface treating agent within the chamber 106 when the cartridge 100 is not attached to the wet cleaning apparatus whilst also facilitating dosing, e.g. metered dosing, of the surface treating agent from the chamber 106 by operation of the volume displacement device 102.

In some embodiments, such as those shown in FIGs. 5 and 6, the first one-way valve 116 is arranged to interface with a port 118 of the volume displacement device 102 when the cartridge 100 is attached to the wet cleaning apparatus.

As also shown in FIGs. 5 and 6, a second one-way valve 120 enables fluid to exit the dosing assembly 108 (defined by the interfacial portion 107 of the cartridge 100 being interfaced with the volume displacement device 102).

The interfacial portion 107 may be arranged relative to the first one-way valve 116 and/or the second one-way valve 120 such that, when the dosing assembly 108 is defined by the interfacial portion 107 interfacing with the volume displacement device 102, one or both of the first and second one-way valves 116, 120 cooperate with the volume displacement device 102, for example by one or both of the first and second one-way valves 116, 120 interfacing with the port 118 of the volume displacement device 102.

In some embodiments, the second one-way valve 120 enables fluid to exit the dosing assembly 108 into the cleaning liquid tank 110. The second one-way valve 120 may also enable restriction of passage of the surface treating agent through the second one-way valve 120 prior to attachment of the cartridge 100. Thus, the second one-way valve 120 may assist in retaining the surface treating agent within the chamber 106 when the cartridge 100 is not attached to the wet cleaning apparatus, e.g. during storage or transportation of the cartridge 100.

The second one-way valve 120 may facilitate dosing, e.g. metered dosing, of the surface treating agent from the chamber by operation of the volume displacement device, whilst also assisting to retain the surface treating agent within the chamber 106 when the cartridge 100 is not attached to the wet cleaning apparatus. Non-limiting examples of the second one-way valve 120 include an umbrella valve, as shown in FIG. 5, a duckbill valve, as shown in FIG. 6, or a ball check valve.

In some embodiments, and referring specifically to that shown in FIG. 5, the first one-way valve 116 is configured to enable fluid to be moved into the chamber 106 by the operation of the volume displacement device 102, and the second one-way valve 120 enables fluid displaced by the fluid moved into the chamber 106 to exit the cartridge 100, and in so doing to exit the dosing assembly 108.

The operation of the volume displacement device 102 may force fluid, e.g. air, into the chamber 106 via the first one-way valve 116. This fluid, e.g. air, forced into the chamber 106 may displace fluid, e.g. surface treating agent, that is caused to exit the cartridge 100 via the second one-way valve 120.

In such embodiments, the first one-way valve 116 and the second one-way valve 120 may be spatially separated from each other across the chamber 106, as shown in FIG. 5. This arrangement of the first one-way valve 116 and the second one-way valve 116 may facilitate dosing of the surface treating agent, e.g. into the cleaning liquid tank 110 beneath the second one-way valve 120.

For example, the first one-way valve 116 and the second one-way valve 120 may be arranged opposite each other across the chamber 106, as shown in FIG. 5, or at least respectively arranged at, or proximal to, different ends of the cartridge 100.

In other embodiments, and referring specifically to that shown in FIG. 6, the first one-way valve 116 is configured to enable fluid to be moved out of the chamber 106 by a first action of the volume displacement device 102. This first movement of fluid, e.g. surface treating agent, is represented in FIG. 6 by the arrows 121A.

The second one-way valve 120 enables the fluid, e.g. surface treating agent, moved out of the chamber 106 by the first action to exit the dosing assembly 108 by a second action of the volume displacement device 102. The movement of fluid, e.g. surface treating agent, caused by the second action is represented in FIG. 6 by the arrow 121B.

In some embodiments, such as that shown in FIG. 6, the cartridge 100 comprises a combination valve 122 that integrates the first one-way valve 116 and the second one-way valve 120. Such a combination valve 122 may assist to simplify assembly of the cartridge 100.

In some embodiments, such as that shown in FIG. 6, the combination valve 122 comprises the first one-way valve 116 in the form of an umbrella valve, and the second one-way valve 120 in the form of a duckbill valve.

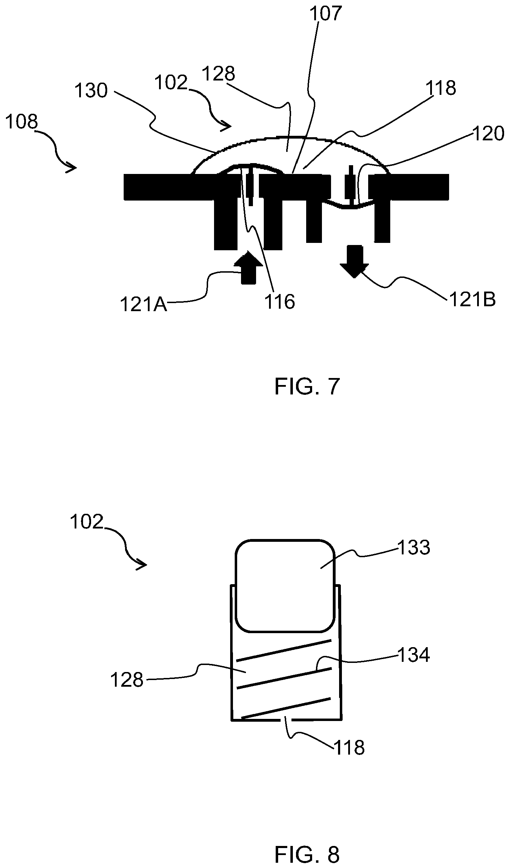

In alternative embodiments, such as those shown in FIGs. 5 and 7, the first one-way valve 116 and the second one-way valve 120 are not integrated into a combination valve of the type shown in FIG. 6. In the non-limiting example shown in FIG. 7, the first one-way valve 116 and the second one-way valve 120 are distinct components that are spatially removed from each other, in this particular case with the first one-way valve 116 being in the form of an umbrella valve and the second one-way valve 120 being in the form of an umbrella valve.

In some embodiments, and referring again to those shown in FIGs. 5 and 6, the cartridge 100 comprises an upper end 124 at or proximal to which the interfacial portion 107 is provided, and a lower end 126 opposing the upper end 124, with the second one-way valve 120 being arranged such that the fluid exits from the dosing assembly 108 in a direction away from the upper end. Such an arrangement of the second one-way valve 120 may facilitate dosing of the surface treating agent, particularly in embodiments in which the cartridge 100 is included in or is attachable to the cover 112 for closing the cleaning liquid tank 110.

The volume displacement device 102 can have any suitable design provided that the operation of the volume displacement device 102 enables the surface treating agent to be dosed from the cartridge 100.

In some embodiments, such as those shown in FIGs. 5 to 8, the volume displacement device 102 comprises a resiliently compressible container 128 whose resilient compression at least partly defines the operation of the volume displacement device 102.

The resiliently compressible container 128 may be at least partly delimited by an optically transmissive wall 130 to allow viewing of fluid inside the resiliently compressible container 128. The user may thus have a visual indication of whether surface treating agent is being dosed.

It is reiterated that in some embodiments the surface treating agent is colored.

Such a colored surface treating agent may be easier for the user to see, in particular through the optically transmissive wall 130.

In some embodiments, such as that shown in FIG. 5, the first and second one-way valves 116, 120 are arranged such that compression of the resiliently compressible container 128 moves fluid, e.g. air, into the chamber 106 via the first one-way valve 116 and fluid, e.g. the surface treating agent, displaced by the fluid moved into the chamber 106 exits the cartridge 100, and thus the dosing assembly 108, via the second one-way valve 120.

In such embodiments, the resiliently compressible container 128 may have an air inlet 131 for allowing air from outside the dosing assembly 108 to enter the compressible container 128 in order to enable the compressible container 128 to recover its resting shape.

In some embodiments, such as those shown in FIGs. 6 and 7, the first and second one-way valves 116, 120 are arranged such that, during recovery to a resting shape of the resiliently compressible container 128 following compression, fluid is moved out of the chamber 106 via the first one-way valve 116, e.g. into the resiliently compressible container 128, referring to the arrows 121A. During subsequent compression of the resiliently compressible container 128 the fluid drawn out of the chamber 106 is caused to exit the dosing assembly 108 via the second one-way valve 120, in the direction shown by the arrow 121B.

The recovery to the resting shape of the resiliently compressible container 128 may correspond to the above-described first action of the volume displacement device 102, and the subsequent compression of the resiliently compressible container 128 may correspond to the above-described second action of the volume displacement device 102.

It is noted that the cartridge 100 may delimit an air vent 132 for admitting air into the chamber 106 while the fluid, e.g. surface treating agent, is being moved out of the chamber 106 via the first one-way valve 116 during the first action of the volume displacement device 102, for example during the recovery to the resting shape of the resiliently compressible container 128.

The resilient compressibility of the resiliently compressible container 128 can be implemented in any suitable manner. In some embodiments, such as those shown in FIGs. 5 to 7, the resilient compressibility is provided by the wall 130 of the resiliently compressible container 128 being made, at least in part, from a resilient material.

In such embodiments, the wall can be regarded as defining a flexible membrane or bellow, with the membrane/bellow being deformable by a force that the user applies to the membrane/bellow to reduce the volume inside the resiliently compressible container 128, but with elasticity of the membrane/bellow enabling recovery to the resiliently compressible container's 128 original/resting shape.

In some embodiments, a spring inside the bellow can be added to help the bellow revert to its original/resting shape.

In other embodiments, such as that shown in FIG. 8, the volume displacement device 102 comprises a resiliently compressible container 128 whose resilient compressibility is provided via a piston 133 coupled to spring 134.

The volume of the resiliently compressible container 128, e.g. bellow, may be sufficient to dose about 1 mL of the surface treating agent in one action. This may mean that the volume displacement by the resiliently compressible container 128, when activated following the first action, may be about 1 mL.

Whilst in the embodiments shown in FIGs. 5 to 7, the first one-way valve 116 is arranged to interface with the port 118 of the volume displacement device 102 when the cartridge 100 is attached to the wet cleaning apparatus, this is not intended to be limiting. In alternative embodiments (not visible), a piston element, e.g. a piston element included in the cartridge 100, is displaceable by the operation of the volume displacement device 102. In such embodiments, the first one-way valve 116 may not interface with a port of the volume displacement device 102 because the operation of the volume displacement device 102 displaces the piston element rather than a fluid.

More generally, the volume displacement device 102 may be manually operable, as shown in FIGs. 5 to 8. Alternatively or additionally, the volume displacement device 102 may include an electrically powered volume displacement device 102. In such embodiments, the electrically powered volume displacement device may be arranged to implement automatic dosing of surface treating agent from the cartridge 100.

Such automatic dosing the surface treating agent may be particularly advantageous in embodiments in which the wet cleaning assembly 104 comprises a robotic wet cleaning device configured to move autonomously over a surface to be cleaned.

The automatic dosing may be implemented in any suitable manner, for example by employing an electrical solenoid arranged to activate a mechanism of the volume displacement device 102.

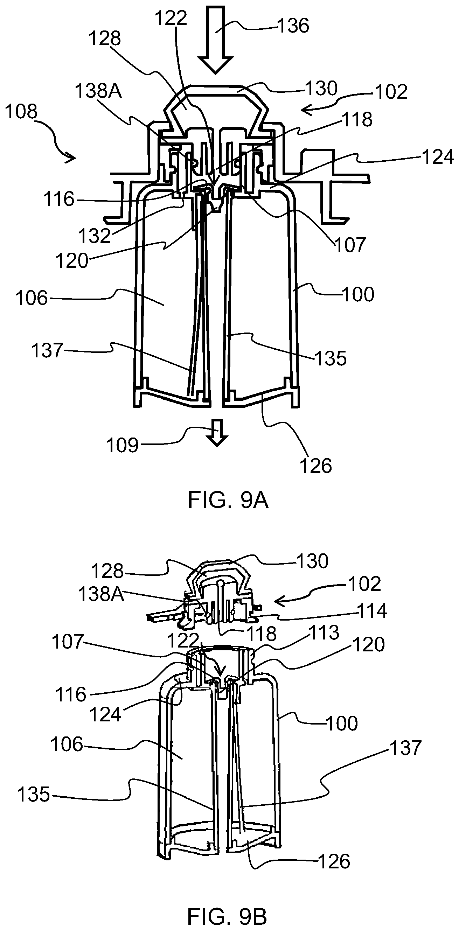

In some embodiments, such as those shown in FIGs. 6, 9A and 9B, the chamber 106 has an annular shape that extends around a fluid passage 135 that is external to the chamber 106. In such embodiments, the fluid passage 135 extends between the upper end 124 and the lower end 126 of the cartridge 100, with the at least one one-way valve 116, 120, e.g. the second one-way valve 120, being arranged at or proximal to the upper end 124.

Such a fluid passage 135 may facilitate direct delivery of the surface treating agent to the exterior of the chamber 106. Thus, the surface treating agent may be more efficiently delivered, in other words with less possibility of incomplete delivery of the surface treating agent, from the dosing assembly 108. Moreover, the fluid passage 135 may assist to minimize the risk of the outer surface of the housing becoming contaminated, e.g. sticky, with surface treating agent.

It is noted that the cartridge 100 having the annular chamber 106 and the fluid passage 135 may be particularly suitable in respect of embodiments in which the second one-way valve 120 enables the fluid, e.g. surface treating agent, moved out of the chamber 106 by the first action of the volume displacement device 102 to exit the dosing assembly 108 by the second action, e.g. by the second action comprising compression of the resiliently compressible container 128 in the direction indicated in FIGs. 6 and 9A by the arrow 136.

The combination valve 122 together with the cartridge 100 having the annular chamber 106 and the fluid passage 135 may assist to provide a relatively short trajectory over which the surface treating agent is transported.

In some embodiments, such as that shown in FIGs. 9A and 9B, the cartridge 100 comprises a dip tube 137. Such a dip tube 137 may assist to minimize wastage of the surface treating agent, particularly in the context of embodiments in which the first one-way valve 116 is configured to enable fluid to be moved out of the chamber 106 by a first action of the volume displacement device 102, e.g. by recovery to the resting shape of the resiliently compressible container 128.

In some embodiments, such as that shown in FIGs. 9A and 9B, a bottom surface delimiting the chamber 106 is sloped towards an inlet end of the dip tube 137. Thus, the surface treating agent remaining in the chamber 106 may, in use, be caused to flow down the slope in the direction of the inlet end of dip tube 137.

The inlet end of the dip tube 137 is preferably positioned at a lowermost portion of the sloped bottom surface.

It is noted that the bottom surface 106 of the chamber 106 may be proximal to the lower end 126 of the cartridge 100.

The dip tube 137 may have an inner diameter of 0.8 mm to 1.5mm.

Such an inner diameter may assist to make the dosing operation more efficient whilst minimizing loss of surface treating agent volume by transporting the surface treating agent via the dip tube 137.

In at least some embodiments, the interface between the cartridge 100 and the volume displacement device 102 may include a sealed region for restricting leakage of the surface treating agent.

The interfacial portion 107 may include a sealing area which provides the cartridge's 100 contribution to the sealed region. Such a sealing area may be included in the interfacial portion 107 together with the coupling part 113, e.g. with the coupling part 113 being separate from the sealing area.

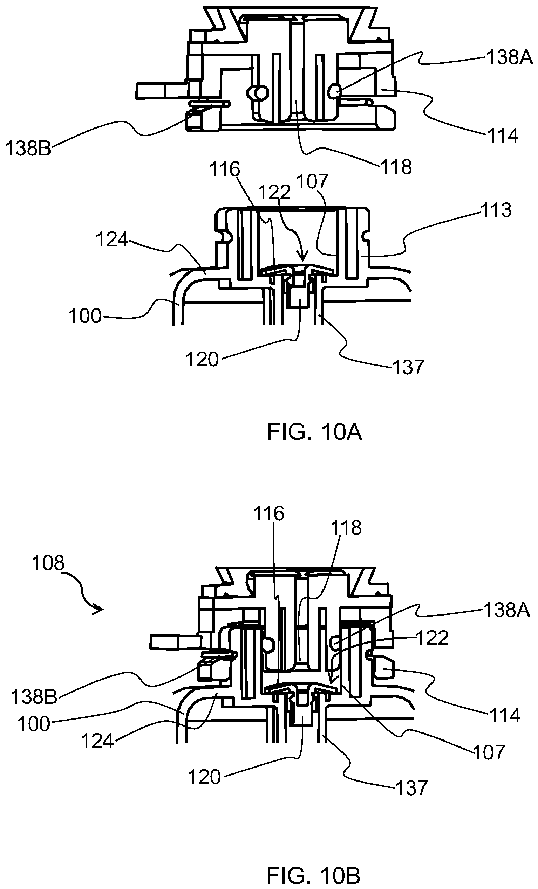

To this end, and as shown in FIGs. 9A, 9B, 10A and 10B, one or more sealing members 138A, 138B may be arranged to seal the interface between the interfacial portion 107 of the cartridge 100 and the volume displacement device 102.

The one or more sealing members 138A, 138B may be included in the cartridge 100 and/or in the wet cleaning apparatus. In embodiments, in which sealing member(s) 138A, 138B are included in the cartridge 100, replenishment of the surface treating agent can be combined with preventative maintenance of the wet cleaning assembly involving replacement of sealing member(s) 138A, 138B.

Referring to FIGs. 10A and 10B, the one or more sealing members 138A, 138B can comprise a first sealing member 138A, e.g. O-ring, and a second sealing member 138B, e.g. O-ring. However, any number of sealing members 138A, 138B can be contemplated, such as one, three, four, and so on.

In embodiments, such as those shown in FIGs. 6 and 9A to 10B, in which the cartridge 100 has the air vent 132, the air vent 132 may, for example, be arranged between the coupling part 113 and the sealing area of the interfacial portion 107.

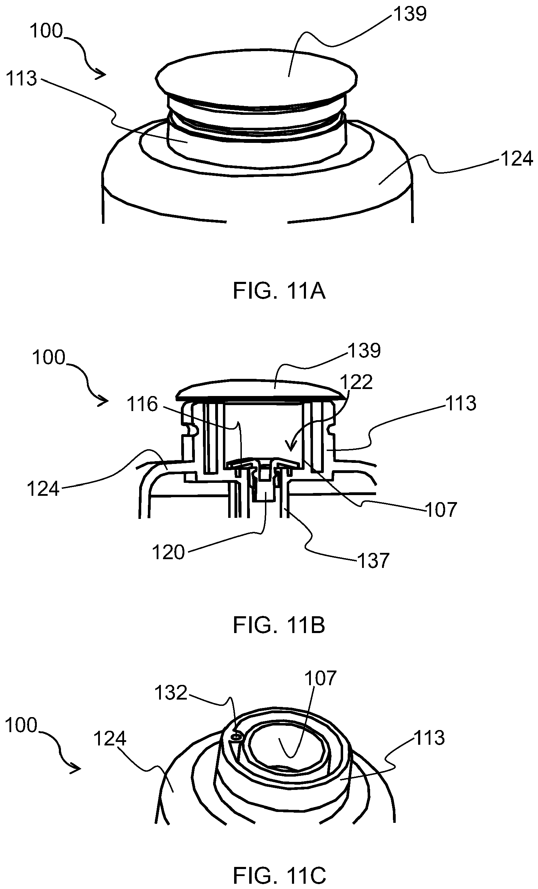

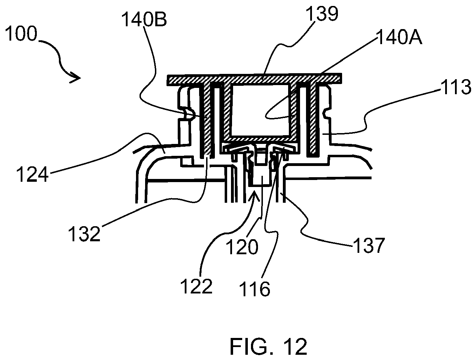

In some embodiments, and referring now to FIGs. 11A to 11C and 12, the cartridge 100 comprises a covering assembly 139 for covering the, e.g. each of the, at least one one-way valve 116, 120 prior to the attachment of the cartridge 100, with the covering assembly 139 being configured to enable the interfacial portion 107 to be accessed in order to permit the interfacial portion 107 to be interfaced with the volume displacement device 102.

The covering assembly 139 may include a seal, e.g. a removable and/or pierceable seal, for sealingly covering the at least one one-way valve 116, 120 prior to the attachment of the cartridge 100.

The covering assembly 139 may provide further protection, to supplement that provided by the at least one one-way valve 120, against leakage of the surface treating agent prior to attachment of the cartridge 100 to the wet cleaning apparatus. Such leakage may, for example, otherwise occur due to pressure and/or temperature variations during transport of the cartridge 100. The covering assembly 139 may further assist to provide tamper protection and/or protection of the at least one one-way valve 116, 120 during storage and transportation of the cartridge 100.

The covering assembly 139 may permit the interfacial portion 107 to be accessed in any suitable manner, such as by the covering assembly 139 being removable, e.g. by peeling, and/or pierceable.

As an alternative or in addition to the covering assembly 139 covering the at least one one-way valve 116, 120, the covering assembly 139 may cover the air vent 132 prior to attachment of the cartridge 100 but enable the air vent 132 to be exposed to allow air to enter the chamber 106 when fluid is being drawn out of the chamber 106, e.g. by the first action of the volume displacement device 102. An example of this is shown in FIGs. 11A to 11C and 12.

In such embodiments, the covering assembly 139 may include a cap or a seal, e.g. a removable and/or pierceable seal, for sealingly covering the air vent 132.

The covering assembly 139 can be kept in place via an area, e.g. an adhesion area, between the coupling part 113 and the sealing area.

In some embodiments, such as those shown in FIGs. 11A to 11C and 12, the covering assembly 139 comprises a unitary covering member that covers the air vent 132 along with the at least one one-way valve 116, 120, e.g. the first valve 116 and/or the second valve 120.

This may facilitate attachment of the cartridge 100, since only the unitary covering member may be manipulated, e.g. peeled and/or pierced, in order to access the interfacial portion 107.

The covering assembly 139, e.g. the unitary covering member, may, for instance, seal the air vent 132 and the combination valve 122.

Such a unitary covering member may be particularly useful in embodiments in which the first one-way valve 116 and the second one-way valve 120 are integrated in the combination valve 122, as shown in FIGs. 11A to 11C and 12. In such embodiments, the unitary covering member, e.g. seal, may provide a seal in a single plane.

In embodiments, such as that shown in FIG. 12, in which the at least one one-way valve 116, 120 and the air vent 132 is or are arranged in a recess, or recesses, defined in an exterior surface of the cartridge 100, the covering assembly 139, e.g. the unitary covering member, may include one or more protruding portions 140A, 140B configured to extend into the, e.g. each of the, recess(es).

Such protruding portions 140A, 140B may assist to enhance the leak prevention provided by the covering assembly 139.

The present disclosure further provides a wet cleaning assembly 104 comprising: a wet cleaning apparatus comprising a volume displacement device 102; a cartridge 100 including a chamber 106 for containing surface treating agent, and an interfacial portion 107 for interfacing with the volume displacement device 102 to define a dosing assembly 108 during attachment of the cartridge 100 to the wet cleaning apparatus; a first one-way valve 116 configured to either enable fluid to be moved out of the chamber 106 or to be moved into the chamber 106 by operation of the volume displacement device 102; and a second one-way valve 120 configured to enable fluid to exit the dosing assembly 108, wherein the first one-way valve 116 and/or the second one-way valve 120 is or are included in the cartridge 100 and configured to enable restriction of passage of the surface treating agent therethrough prior to attachment of the cartridge 100.

The first one-way valve and/or the second one-way valve may be included in the cartridge 100.

The cartridge 100 included in the wet cleaning assembly 104 can be the cartridge 100 of any of the embodiments described above in relation to FIGs. 1 to 12.

Alternatively, the first one-way valve 116 and/or the second one-way valve 120 can be part of the cartridge 100 or can be part of the wet cleaning apparatus, e.g. part of the volume displacement device 102.

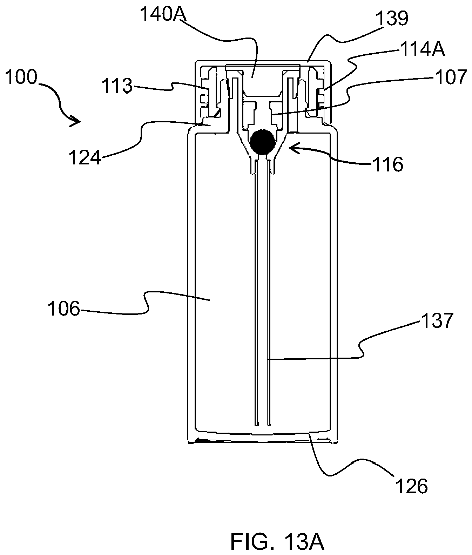

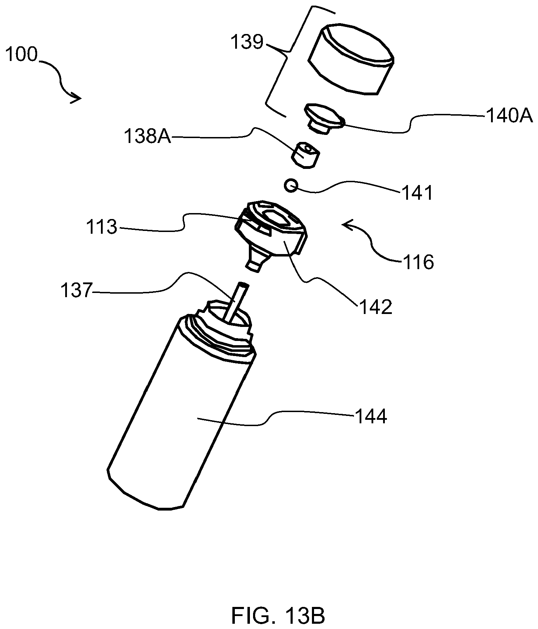

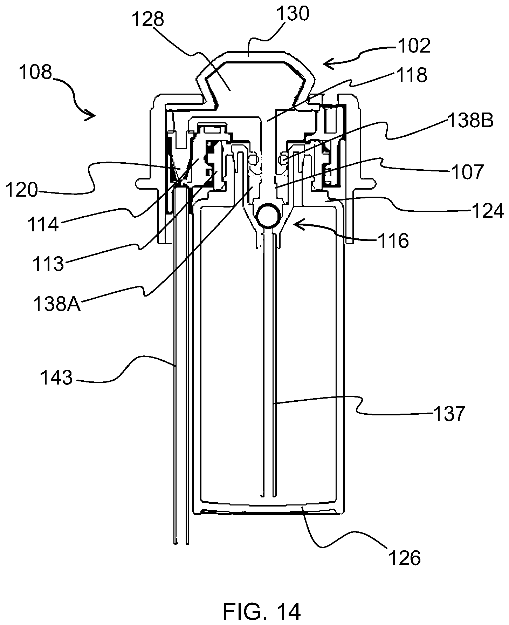

In some embodiments, such as that shown in FIGs. 13A, 13B and 14, the first one-way valve 116 is included in the cartridge 100, and the second one-way valve 120 is included in the wet cleaning apparatus, in particular as part of the volume displacement device 102.

In such embodiments, the first one-way valve 116 may comprise, e.g. be, a ball check valve, as shown in FIGs. 13A, 13B and 14, an umbrella valve, or a duckbill valve.

The second one-way valve 120 may comprise, e.g. be, a duckbill valve, as shown in FIG. 14, an umbrella valve, or a ball check valve.

Evident in the exploded view provided in FIG. 13B is the ball 141 of the first one-way valve 116 in the form of the ball check valve. The ball 141 can be formed of any suitable material such as metal or glass. Particular mention is made of the ball 141 being a glass bead.

As shown in FIGs. 13A and 13B, the cartridge 100 having the first one-way valve 116 may further comprise a covering assembly 139 for covering, e.g. sealingly covering, the first one-way valve 116 prior to the attachment of the cartridge 100. In this example, the covering assembly 139 includes a protruding portion 140A that extends into a recess in the exterior surface of the cartridge 100 in which the first one-way valve 116 is arranged.

The coupling part 113, e.g. part of a bayonet coupling, may be included in a second portion 142 of the cartridge 100 that closes a first portion 144 of the cartridge 100, e.g. by snap fitting the second portion 142 onto the first portion 144.

The first portion 144 of the cartridge 100 may be filled with surface treating agent and the second portion 142 snap fitted onto the first portion 144 in order to close the chamber 106. Other techniques for closing the cartridge 100, such as welding the first and second portions 142, 144 to each other, as previously described, can also be contemplated.

It is reiterated that the interfacial portion 107 may include a sealing area which provides the cartridge's 100 contribution to the sealed region for restricting leakage of the surface treating agent at the interface between the cartridge 100 and the volume displacement device 102. Such a sealing area may be included in the interfacial portion 107 together with the coupling part 113, as previously described.

In some embodiments, such as that shown in FIGs. 13A, 13B and 14, the cartridge 100 includes one or more sealing members 138A that at least partly define the sealing area.

It is noted that the sealing member(s) 138A in combination with the ball check valve 116 may preclude refilling of the cartridge 100 shown in FIGs. 13A and 13B by the consumer. Once closed, e.g. via snap-fitting, the cartridge 100 may also be relatively difficult to open.

In embodiments, such as that shown in FIGs. 13A and 13B, in which the cartridge 100 comprises the covering assembly 139, the covering assembly 139, e.g. the covering assembly 139 comprising the unitary covering member, such as a cap, may include a further complementary coupling part 114A for coupling to the coupling part 113 when the cartridge 100 is not attached to the wet cleaning apparatus.

In such embodiments, the complementary coupling part 114 of the wet cleaning apparatus may correspond to the further complementary coupling part 114A of the covering assembly 139, e.g. cap.

This may facilitate attachment of the cartridge 100 to the wet cleaning apparatus, since the same coupling principle may be used in the attachment/detachment of the covering assembly 139, e.g. cap, to cover/expose the interfacial portion 107 as in the attachment/detachment of the cartridge 100 to the wet cleaning apparatus.

Further evident in the cartridge 100 and dosing assembly 108 shown in FIGs. 13A, 13B, 14 and 15 is the dip tube 137.

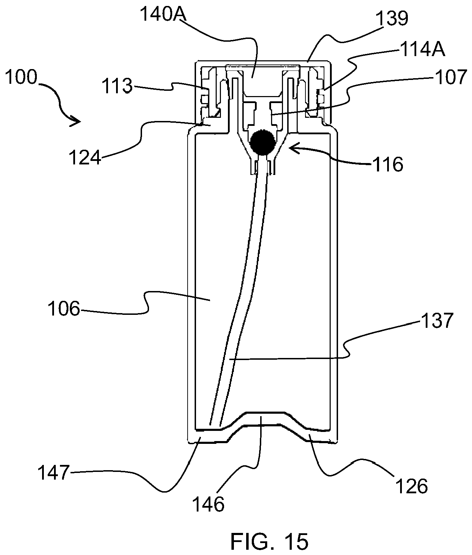

With reference to FIG. 15, the inlet end of the dip tube 137 is shown positioned at a lowermost portion of the sloped bottom surface. Moreover, in this example the lower end 126 of the cartridge 100 has a raised central portion 146 and a peripheral support portion 147 extending around the raised central portion 146.

The shape of the lower end 126 of the cartridge 100 provided by the raised central portion 146 and the peripheral support portion 147 may enable the cartridge 100 to be stable when supported via the peripheral support portion 147 on a surface in an upright position.

Such a shape may also generate space for moulding features without hampering the stable surface, and may provide the above-described lowermost portion at which the inlet end of the dip tube 137 can be positioned.

The first one-way valve 116 is configured in the example shown in FIGs. 13A, 13B, 14 and 15 to enable fluid to be moved out of the chamber 106 by a first action of the volume displacement device 102, which in this case corresponds to recovery to the resting shape of the resiliently compressible container 128. The fluid is drawn out of the chamber 106 through the ball check valve that defines the first one-way valve 116 in this example.

The second one-way valve 120 enables the fluid, e.g. surface treating agent, moved out of the chamber 106 by the first action to exit the dosing assembly 108 by a second action of the volume displacement device 102, which in this case corresponds to compression of the resiliently compressible container 128. The fluid is pushed out of the dosing assembly 108 through the duckbill valve that defines the second one-way valve 120 in this example.

Note that the first one-way valve 116, in this case the ball check valve, is arranged so that the ball 141 is forced against a valve seat to prevent backflow of fluid into the cartridge 100 during the second action of the volume displacement device 102. Moreover, the second one-way valve 120, in this case the duckbill valve, is arranged so that air is prevented from being drawn from the outside of the dosing assembly 108 into the dosing assembly 108 during the first action of the volume displacement device 102.

In some embodiments, such as that shown in FIG. 14, the wet cleaning apparatus includes a fluid channel 143 extending from the second one-way valve 120, e.g. in the direction of the cleaning liquid tank 110.

Whilst not visible in the Figures, the dosing assembly 108, and in particular the volume displacement device 102, may be covered by a housing portion of the wet cleaning apparatus. This housing portion may block access to the volume displacement device 102, e.g. the resiliently compressible container 128.

This may assist to prevent unintentional operation of the volume displacement device 102. Such a design may also assist to simplify electronic activation of the volume displacement device 102, e.g. via a solenoid.

In some embodiments, dosing of the surface treating agent from the cartridge 100 is triggered by mounting of the cleaning liquid tank 110, e.g. together with the dosing assembly 108, in the wet cleaning assembly 104.

The dosing of the surface treating agent may thus be regarded as being implemented in a semi-automatic manner.

In such embodiments, the mounting of the cleaning liquid tank 110 may comprise an engagement feature of the wet cleaning assembly 104 engaging with the volume displacement device 102 during the mounting to cause dosing of the surface treating agent.

For example, the mounting of the cleaning liquid tank 110 may cause the engagement feature of the wet cleaning assembly 104 to compress the resiliently compressible container 128 when the cleaning liquid tank 110, e.g. together with the dosing assembly 108, is positioned, e.g. rotated into position, in the wet cleaning assembly 104.

More generally, the cartridge 100 and the wet cleaning assembly 104 of the present disclosure may enable relatively highly concentrated surface treating agents to be used, in other words dosed from the cartridge 100. Such surface treating agents are in some cases harmful for the wet cleaning apparatus and/or harmful for the surface, e.g. floor, being treated/cleaned using the wet cleaning apparatus.

Risks associated with such highly concentrated surface treating agents may nonetheless be mitigated by the dosing into, and concomitant dilution by the cleaning liquid contained in, the cleaning liquid tank 110. The highly concentrated nature of the surface treating agent may permit the cartridge 100 to be relatively small, and thus occupy only a limited amount of the space in the wet cleaning assembly 104.

The interface between the cartridge 100 and the volume displacement device 102 may assist to ensure that the correct surface treating agent is used and that the correct amount is dosed. Components may be placed at the cartridge side or the volume displacement device side of the interface depending on their susceptibility to wear.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A cartridge (100) attachable to a wet cleaning apparatus, the wet cleaning apparatus having a volume displacement device (102) for dosing surface treating agent from the cartridge, the cartridge comprising:
a chamber (106) for containing surface treating agent;
an interfacial portion (107) for interfacing with the volume displacement device to define a dosing assembly (108) during attachment of the cartridge; and
at least one one-way valve (116, 120) configured to:
enable fluid to exit the chamber or to exit the chamber and the dosing assembly by operation of the volume displacement device; and
restrict passage of the surface treating agent therethrough prior to attachment of the cartridge.

2. The cartridge (100) according to claim 1, wherein the cartridge is attachable to a cleaning liquid tank (110) of the wet cleaning apparatus, surface treating agent exiting the dosing assembly (108) being receivable in the cleaning liquid tank; optionally wherein the cartridge is included in or is attachable to a cover (112) for closing the cleaning liquid tank.

3. The cartridge (100) according to claim 1 or claim 2, wherein the at least one one-way valve (116, 120) comprises a first one-way valve (116) configured to enable fluid to be moved out of the chamber (106) or to be moved into the chamber by the operation of the fluid displacement device (102).

4. The cartridge (100) according to claim 3, wherein the at least one one-way valve (116, 120) further comprises a second one-way valve (120) configured to enable fluid to exit the dosing assembly (108).

5. The cartridge (100) according to claim 4, comprising a combination valve (122) that integrates the first one-way valve (116) and the second one-way valve (120).

6. The cartridge (100) according to claim 4 or claim 5, wherein the first one-way valve (116) is configured to enable fluid to be moved out of the chamber (106) by a first action of the volume displacement device (102), and the second one-way valve (120) is configured to enable the fluid moved out of the chamber by the first action to exit the dosing assembly (108) by a second action of the volume displacement device; optionally wherein the cartridge comprises an air vent (132) for admitting air into the chamber while the fluid is being moved out of the chamber via the first one-way valve during the first action of the volume displacement device.

7. The cartridge (100) according to claim 4 or claim 5, wherein the first one-way valve (116) is configured to enable fluid to be moved into the chamber (106) by the operation of the volume displacement device (102), and the second one-way valve (120) is configured to enable fluid displaced by the fluid moved into the chamber to exit the cartridge; optionally wherein the first one-way valve and the second one-way valve are spatially separated from each other across the chamber.

8. The cartridge (100) according to any one of claims 1 to 7, comprising a covering assembly (139) for covering the at least one one-way valve (116, 120) prior to the attachment of the cartridge, the covering assembly being configured to enable the interfacial portion (107) to be accessed in order to permit the interfacial portion to be interfaced with the volume displacement device (102).

9. The cartridge (100) according to claim 8 as according to claim 6, wherein the covering assembly (139) is arranged to cover an air vent (132) of the cartridge, the covering assembly being configured to enable the air vent to be exposed to allow air to enter the chamber (106) when fluid is being drawn out of the chamber by the first action of the volume displacement device (102); optionally wherein the covering assembly comprises a unitary covering member that covers the air vent along with the at least one one-way valve (116, 120).

10. The cartridge (100) according to any one of claims 1 to 9, wherein the cartridge is disposable; and/or wherein the surface treating agent is included in the cartridge.

11. A wet cleaning assembly (104) comprising:
a wet cleaning apparatus comprising a volume displacement device (102);
a cartridge (100) including a chamber (106) for containing surface treating agent, and an interfacial portion (107) for interfacing with the volume displacement device to define a dosing assembly (108) during attachment of the cartridge to the wet cleaning apparatus;
a first one-way valve (116) configured to either enable fluid to be moved out of the chamber or to be moved into the chamber by operation of the volume displacement device;
a second one-way valve (120) configured to enable fluid to exit the dosing assembly, wherein the first one-way valve and/or the second one-way valve is or are included in the cartridge and configured to enable restriction of passage of the surface treating agent therethrough prior to attachment of the cartridge; and optionally
a cleaning liquid tank (110) for receiving surface treating agent exiting the dosing assembly via the second one-way valve.

12. The wet cleaning assembly (104) according to claim 11, wherein the first one-way valve (116) is included in the cartridge (100), and the second one-way valve (120) is included in the wet cleaning apparatus; optionally wherein the second one-way valve is included in the volume displacement device (102).

13. The wet cleaning assembly (104) according to claim 11 or claim 12, wherein the volume displacement device (102) comprises a resiliently compressible container (128) whose resilient compression at least partly defines the operation of the volume displacement device; optionally wherein the resiliently compressible container is at least partly delimited by an optically transmissive wall (130) to allow viewing of fluid inside the resiliently compressible container.

14. The wet cleaning assembly (104) according to claim 13, wherein the first and second one-way valves (116, 120) are arranged such that, during recovery to a resting shape of the resiliently compressible container following compression, fluid is moved out of the chamber (106) via the first one-way valve (116), and during subsequent compression of the resiliently compressible container the fluid drawn out of the chamber is caused to exit the dosing assembly (108) via the second one-way valve (120); or wherein the first and second one-way valves are arranged such that compression of the resiliently compressible container moves fluid into the chamber via the first one-way valve and fluid displaced by the fluid moved into the chamber exits the cartridge (100) via the second one-way valve.

15. The wet cleaning assembly (104) according to any one of claims 12 to 14, wherein the wet cleaning assembly comprises one or more of a wet mopping device, a wet vacuum cleaner, a window cleaner, and a sweeper; and/or wherein the wet cleaning assembly comprises a robotic wet cleaning device configured to move autonomously over a surface to be cleaned.
